# EUROPEAN PATENT SPECIFICATION

(11) **EP 1 771 085 B1**
(45) Date of publication and mention of the grant of the patent: **20.06.2012**
(21) Application number: 05752879.6
(22) Date of filing: 10.06.2005
(51) Int. Cl.: A23J 3/22, A23J 3/10, A23J 3/28

(54) **MEAT SUBSTITUTE PRODUCT COMPRISING FIBRES AND METHOD FOR THE PREPARATION THEREOF**
FASERHALTIGES FLEISCHERSATZPRODUKT UND VERFAHREN ZU SEINER HERSTELLUNG
PRODUIT DE SUBSTITUTION DE VIANDE COMPRENANT DES FIBRES ET PROCEDE DE PREPARATION DE CE DERNIER

(30) Priority: 11.06.2004 NL 1026392
(43) Date of publication of application: 11.04.2007
(73) Proprietor: NUG NAHRUNGS-UND GENUSSMITTEL VERTRIEBSGESELLSCHAFT MBH, 71334 Waiblingen (DE)
(72) Inventor: PENDERS, Johannes, Antonius, 5324 AV Ammerzoden (NL); BEKHUIS, Anna, Maria, 3904 WD Veenendaal (NL)
(74) Representative: van Westenbrugge, Andries
(86) International application number: PCT/NL2005/000424
(87) International publication number: WO 2006/009426

(56) References cited:
- EP-A- 0 040 048
- WO-A-99/55165
- WO-A-03/061400
- CA-A1- 1 103 981
- GB-A- 886 487
- GB-A- 977 239
- GB-A- 1 081 627
- GB-A- 1 474 179
- US-A- 3 840 671

## Description

### Technical background

The invention first of all relates to a meat substitute product that comprises fibres that are made up of at least curd, a hydrocolloid precipitated with metal cations and water. Depending on its method of formation, the meat substitute product contains smaller or larger amounts of metal cation with a valency of at least two, such as calcium, bound to phosphate and/or water-soluble phosphate. Instead of phosphate, another agent that binds or complexes metal cations can be present, such as EDTA or citrate.

### State of the art

GB 1 081 627 describes a meat substitute product which comprises fibres that are made up of at least curd (casein), a hydrocolloid (soy protein) precipitated with cations (sodium) and water. The Example of this British patent describes the use of a binder consisting of a dispersion of water, egg albumin, peanut butter, plant hydrolysate, sodium glutamate and dyestuff.

US 3,840,671 describes a process for producing a fibrous protein product which comprises stirring an aqueous solution of a non-fibrous protein adjusted to a pH of 6 to 9 with a gelating agent selected from the group consisting of calcium chloride and magnesium chloride, and a protease, for a time sufficient to convert the non-fibrous protein to fibrous protein, stretching the resulting product so as to impart an orientation thereto and inactivating the protease in the resulting product.

A meat substitute product of the type described in the "Technical background" is disclosed in WO 03/061400. In this publication curd is understood to be the product that is obtained in cheese making when milk is mixed with rennet and lactic acid bacteria under the conditions customary in cheese making. The curd obtained is incorporated as such in the present meat substitute product. It is also pointed out that curd can also be in the form of dried rennet casein that has been dispersed in water.

In the cited publication a preparation is described for a meat substitute product that comprises a milk protein material, a hydrocolloid precipitated with metal cations such as calcium ions, such as alginate, and water.

Such a product also contains small amounts of calcium phosphate originating from the phosphate that is used in the method to complex the bindable calcium ions present in the milk protein material when forming a mixture of milk protein material and alginate. The phosphate converts the calcium ions to an insoluble calcium phosphate complex, as a result of which the calcium ions, together with the hydrocolloid, such as an alginate, are prevented from causing premature precipitation thereof, so that the formation of a uniform fibrous product after the addition of calcium chloride is rendered impossible. Instead of phosphate, other calcium-binding agents, such as EDTA, Na citrate and the like, can also be used. However, phosphate (for example (NaPO₃)ₙ where n ≈ 25) is a readily available agent that works well and is preferred.

The product obtained has excellent organoleptic characteristics and is of excellent quality in terms of taste-forming options, texture, bite and feel in the mouth. The product formed can be eaten cold, for example as a snack or cubes for salad, but can also be heated in the microwave, baked in a pan, deep-fried and the like before consumption in order to render the product in another desirable attractive state. The fibrous product can be regarded as a matrix of precipitated alginate in which milk protein particles have been captured. When the product described above is subjected to a heat treatment a reduction in quality is sometimes observed that makes the product lose cohesion to some extent. The non-cohesive nature is associated with the fact that when alginate is precipitated with metal cations, such as calcium, the stickiness of this alginate is largely lost. On heating the cohesive power of the alginate matrix can then become inadequate, so that the problem outlined arises. Such a nature does not interfere with the taste, but does have an adverse influence on the experience of texture; an improvement in the cohesion, especially during the heating procedure, however, would be desirable.

### Summary of the invention

The Applicant has carried out extensive research in order to provide a solution suitable for said purpose and has found, surprisingly, that the problems outlined above that arise on heating can be resolved if a binder that gels on heating is also present in the meat substitute product described above.

Such a binder will exhibit its gelling characteristics precisely when heating of the shaped meat substitute product takes place; the gelling that takes place precisely during heating then provides the improvement in cohesion that is thus desired under these conditions. The product can have high moisture contents (up to approximately 70 % (m/m)) without any problem; freezing and defrosting are withstood without problems and pressing, for shaping thereof, can be dispensed with.

### Detailed description of the invention

The binder to be used is chosen from methylcellulose, hydroxypropylmethylcellulose, curdlan gum, konjac gum, chicken egg protein, whey protein and mixtures of two or more of these binders.

The abovementioned binders, on their own or in the form of a mixture, optionally with supplementary binders that in themselves do not gel on heating, all have the characteristic that when the temperature is raised gelling of the binder takes place with binding of water. At low temperature the abovementioned binders or combinations thereof produce a desired stickiness.

Some of these binders form a reversible gel, that is to say a gel that forms when the temperature is raised and that loses its gel character again on return to ambient temperature; other binders have a permanent gel character.

As indicated above, the hydrocolloid to be used in the present meat substitute product is alginate, pectin with a low content of methoxy groups or gellan gum, as indicated in the abovementioned published application WO 03/061400. The amounts of materials to be used are essentially those which are disclosed in the abovementioned application, that is to say taking an amount by weight of curd of A an amount A of water is added (total weight 2A); based on 2A 0.8 - 1.2 % (m/m) Na polyphosphate ((NaPO₃)ₙ with n ≈ 25); based on 2A 2.5 - 3.5 % (m/m) Na alginate (such as DMB Manugel from Kelco) and supplementary water in an amount A. The precipitation of the fibres containing alginate and milk protein is effected using 3 - 5 % (m/m) CaCl₂ solution. It is pointed out that the abovementioned values can still be varied, depending on the materials used. For instance, good results have been obtained with amounts of Na polyphosphate of between 0.5 and 1.5 % (m/m) based on 2A and Na alginate of 2.0 to 4.0 % (m/m) based on 2A. The amounts of water to be used can also be varied; depending on the conditions, the amounts A that have been mentioned can be between 0.5 and 1.5 A without impairing the end product.

Appropriately the binder that gels on heating comprises methylcellulose and/or hydroxypropylmethylcellulose. Such cellulose materials form gels that are reversible, as explained above. Such cellulose materials can, for example, be obtained from the Dow Chemical company under the trade name Methocel, the type numbers of which are as follows: Methocel A (methylcellulose E461); Methocel E, F and K (hydroxypropylmethylcellulose; E464). The various cellulose materials have gel-forming temperatures of 38 - 44 °C (A) to 70 - 90 °C (K).

The binder advantageously comprises methylcellulose.

In general a good result will be obtained when methylcellulose is used in an amount of 0.1 - 2.0 % (m/m), based on the weight of the fibres, and chicken egg protein is used in an amount of 0.5 - 5.0 % (m/m).

The ratio between the amounts of methylcellulose and chicken egg protein will be chosen depending on the type of product. If, for example, the meat substitute product is a natural-type product (which include, for example, stir fry cubes, burgers, snacks and mince type products) the product contains approximately 0.5 % (m/m) (based on the total weight of fibres) methylcellulose and approximately 2.5 % (m/m) chicken egg protein.

If the meat substitute product is a breaded product, the use of approximately 1.0 % (m/m) methylcellulose and approximately 3.0 % (m/m) chicken egg protein is preferred.

The meat substitute product described above preferably has a fat content of between 0 and 10, in particular between 2 and 10 weight percent, based on the total fibres. The fat content can be kept so low as a result of the choice of the raw materials. For example, skimmed milk with a fat content of the order of 0 to 0.2 % (m/m), preferably at most 0.1 % (m/m), is used for the preparation of the curd.

The product has a shelf life of up to 6 weeks at approximately 7 °C, that is to say under conditions in a refrigerator.

When preparing the meat substitute product for immediate consumption, for example by frying in a pan, it is striking that the product does not spatter excessively and that the product does not become dry as a result of excessive loss of moisture.

After a heat treatment, such as deep frying or cooking, at least part of the binder used is present in gel form in the product. The gel form present in particular has an important function for retaining moisture, as a result of which a dry product is not obtained on frying.

The meat substitute product according to the invention as described above is furthermore characterised in that this is able to withstand freezing and defrosting, structure and moisture content being retained.

The invention also relates to a method for the preparation of a meat substitute product in which curd, a hydrocolloid that precipitates with metal cations having a valency of at least two selected from the group consisting of alginate, pectin with a low methoxy group content, gellan gum and mixtures of these hydrocolloids and water are mixed in the presence of a phosphate material; a solution of metal cations with a valency of at least two is added to form fibres containing at least precipitated hydrocolloid and curd, followed by isolation of the fibres, which is characterised in that
a) a mixture of curd, a phosphate material and water is made
b) a solution in water of the hydrocolloid that precipitates with metal cations with a valency of at least two is made
c) the mixture from a) and the solution from b) are mixed
d) an aqueous solution that contains metal cations with a valency of at least two is added to the mixture obtained in c) to form fibres
e) the fibres formed are isolated
f) the fibres formed are mixed with a binder that gels on heating, said binder being chosen
from methylcellulose, hydroxypropylmethylcellulose, curdlan gum, konjac gum, chicken egg protein, whey protein and mixtures of two or more of these binders.

The method according to the invention outlined above differs from the method that is disclosed in WO 03/061400 in that here a mixture is made of curd, a phosphate material (or other material that binds/complexes calcium ions) and water, on the one hand, and, on the other hand, a solution in water of a hydrocolloid that precipitates with metal cations with a valency of at least two and in that the mixture containing curd and the solution containing hydrocolloid are mixed with one another, after which a solution containing metal cations with a valency of at least two is added to the previously formed total mixture to form fibres. The present method also differs in that after isolation of the fibres formed the fibres formed are mixed with a binder that gels on heating.

Mixing of the mixture containing the curd phosphate material in water with the hydrocolloid solution is appropriately carried out at a temperature of 50 - 80 °C, adjusting the pH to a value of 6.5 - 7.5. In particular, the pH is adjusted to approximately 7, and more particularly to 7, using aqueous sodium hydroxide solution.

The curd to be used in the method can be the customary curd formed in cheese making, such as, for example, Maasdam or Gouda-type curd; advantageously, however, skimmed milk with a fat content of at most 0.1 % (m/m) is used as the starting material for forming the curd that is used in the method according to the present invention. This raw material forms the basis for a meat substitute product as described in the present application with a fat content of between 0 and 10 % (m/m). On the basis of microbiological considerations, a process step that comprises bactofugation or microfiltration is incorporated in order to remove, in particular, *Clostridium botulinum* (traces) so that the milk used is substantially free from bacteria. For this purpose the milk is pasteurised at approximately 75 °C for approximately 15 seconds after, for example, having been bactofugated at 50 °C beforehand. With regard to the formation of the curd, use can, of course, be made of the ingredients rennet and lactic acid bacteria normally used when forming curd in cheese making; however, in connection with Kosher and Halal acceptance, use is preferably made of microbial rennet such as, for example, Milase® XQL-220 from CSK Food Enrichment, Leeuwarden, NL or Fromase® XL or TL from DSM Food Specialities, Dairy Ingredients, Delft, NL. Curd that has been prepared using microbial rennet and forms part of the meat substitute product that is prepared with the aid of the method according to the invention is exceptionally suitable for use in Kosher or Halal type foods as well as in foods of a vegetarian nature.

In cheese making use is usually also made of lactic acid bacteria when curd is formed; the lactic acid bacteria usually help in the formation of the curd and is customarily used for this purpose.

In the present invention the use of lactic acid bacteria can highly advantageously be dispensed with because the supplementary function known for lactic acid bacteria, that is to say lowering the pH and development of taste during maturing of cheese formed from the curd, can be dispensed with in the case in question. The curd that is used in the present invention to form a meat substitute product is therefore preferably prepared using rennet, and in particular microbial rennet, only.

The method outlined above will be explained below:

The starting material is skimmed milk that is bactofugated at 50 °C and is then pasteurised at 75 °C for 15 sec. Curdling (here with microbial rennet) is carried out in the conventional manner with the addition of calcium cloride solution (33 %). The curd is separated by draining off from the whey curd mixture formed; the curd is mechanically comminuted. (NaPO₃)ₙ (n ≈ 25) is added to the curd at 70 - 75 °C, as a result of which a melt is obtained. (Instead of phosphate, use can also be made of EDTA, citrate or other materials that complex or bind Ca ions).

The mixture is brought to a pH of approximately 7 using NaOH solution. A solution of Na alginate in water at 70 °C is made separately, which is mixed with the previously formed melt until a visually homogeneous mixture has been obtained. The homogeneous mixture is mixed with 4 % CaCl₂ solution to form the desired alginate/milk protein fibres that are then drained and then washed with water to obtain a fibrous intermediate product.

In the method as described, dried rennet casein can also be used instead of curd from skimmed milk. After distributing or dispersing in water, a material that complexes calcium ions is added, after which the indicated method is followed. After draining the fibres, the binder or binder mixture as discussed above is added and the fibre mass is suitable for a shaping operation so that the final shape of the meat substitute product is obtained.

The invention will now be further illustrated on the basis of the following examples:

### Example 1

In a typical embodiment on laboratory scale the starting material is 600 g curd that has been formed from skimmed milk using microbial rennet without the use of lactic acid bacteria and where the skimmed milk was bactofugated at 50 °C and then pasteurised at 75 °C for 15 sec. 400 gram water and 13 gram sodium polyphosphate (NaPO₃)ₙ where n is approximately 25 was added to the curd. After heating (melting), the pH is brought to approximately 7 using NaOH in order to increase the effectiveness of calcium binding. A solution of 22.5 gram sodium alginate (Kelco® DMB) in 500 g water was then made and the mixture containing curd, sodium polyphosphate and water was then mixed with the solution containing sodium alginate, with stirring (paddle stirrer). Finally, with continuous stirring, the mixture was sprayed with 450 gram 4 % (m/m) CaCl₂ and further mixed to form the fibres.

The fibres are isolated using sieving, after which they are washed. As indicated above, in the above experiment it is also possible to use dried rennet casein as the starting material, which after dispersion in water is mixed with a material that binds calcium ions, such as phosphate, citrate or EDTA. The other steps in the method can then be carried out.

The fibres formed are mixed in a paddle mixer with binder, for example 0.5 % methylcellulose (Methocel A ®; Dow Chemical) and 2.5 % chicken egg protein (Nivé Nunspeet (NL); powder containing a minimum of 80 % (m/m) chicken egg protein) based on the weight of the fibres; 3.5 % flavourings or herbs is then added. The mixture formed in this way is shaped in a shaping machine at a temperature below 10 °C to give, for example, burgers or base material for stir fry cubes.

In one embodiment the shaped burgers are coated (4 % film coating) for a natural type. The film coating used consists of flour (wheat or rice), native starch, dextrose, modified starch and chicken egg protein. In another version the product is breaded with a breading agent that makes up 20 % of the weight of the end product.

The burger or the breaded version is then deep-fried at 150 - 180° for 30 - 60 seconds, slight absorption of fat taking place. Deep-frying can be carried out with a wide variety of oils. However, sunflower oil is suitably used.

The product is then cooked in an oven (which also involves a lethal heat treatment), for example for 5 minutes at 170 °C, some loss of moisture taking place and the centre of the product reaching a temperature of 85 - 90 °C for 4-5 minutes. Finally the product is packed in a modified atmosphere pack under an atmosphere of, for example, 70 % N₂ and 30 % CO₂.

The product can be stored by the consumer at refrigerator temperature of at most 7 °C for a period of 2 - 6 weeks.

The meat substitute product obtained with the aid of the method, which contains binder or binder mixture that gels on heating, has the advantage that when the meal is prepared (for example by frying in a pan) it does not dry out and in addition does not spatter excessively. This applies in particular in the variant for stir fry cubes and mince. The good quality of the meat substitute product is retained even if the normal preparation time (4 min) is greatly exceeded.

## Claims

1. Meat substitute product that comprises fibres that are made up of at least curd, a hydrocolloid precipitated with metal cations selected from the group consisting of alginate, pectin with a low methoxy group content, gellane gum and mixtures of these hydrocolloids and water, **characterised in that** a binder that gels on heating is also present, said binder being chosen from methylcellulose, hydrxoypropylmethylcellulose, curdlan gum, konjac gum, chicken egg protein, whey protein and mixtures of two or more of these binders.

2. Meat substitute product according to Claim 1, **characterised in that** the meat substitute product has been obtained by mixing the fibres with the binder that gels on heating.

3. Meat substitute product according to Claim 1 or 2, **characterised in that** the binder is chosen from mixtures of one or more of methylcellulose, hydrxoypropylmethylcellulose, curdlan gum, konjac gum, chicken egg protein and whey protein with starch or modified starch, sodium carboxymethylcellulose (Na CMC), carrageenan, xanthan gum, carob seed gum and gellan gum.

4. Meat substitute product according to one or more of the preceding claims, **characterised in that** the binder comprises methylcellulose and/or hydroxypropylmethylcellulose.

5. Meat substitute product according to Claim 4, **characterised in that** the binder comprises methylcellulose.

6. Meat substitute product according to one or more of Claims 3 - 5, **characterised in that** the binder is a mixture of methylcellulose and chicken egg protein.

7. Meat substitute product according to Claim 6, **characterised in that** the binder comprises 0.1 - 2.0 % (m/m) methylcellulose, based on the weight of the fibres, and 0.5 - 5.0 % (m/m) chicken egg protein based on the weight of the fibres.

8. Meat substitute product according to one or more of the preceding claims, **characterised in that** the hydrocolloid precipitated with metal cations is alginate.

9. Meat substitute product according to one or more of Claims 1 - 8, **characterised in that** the product has a fat content of 2 - 10 % (m/m) based on the total weight thereof.

10. Meat substitute product according to one or more of Claims 1 - 8, **characterised in that** that product can be kept for up to 6 weeks at 7 °C.

11. Meat substitute product according to one or more of the preceding claims, **characterised in that** at least part of the binder used is present in gel form.

12. Meat substitute product according to one or more of the preceding claims, **characterised in that** the product is able to withstand freezing and defrosting, structure and moisture content being retained.

13. Meat substitute product according to one or more of the preceding claims, **characterised in that** the meat substitute product contains metal cations with a valency of at least two bound by phosphate.

14. Method for the preparation of a meat substitute product in which curd, a hydrocolloid that precipitates with metal cations having a valency of at least two selected from the group consisting of alginate, pectin with a low methoxy group content, gellan gum and mixtures of these hydrocolloids and water are mixed in the presence of a material complexing calcium ions; a solution of metal cations with a valency of at least two is supplied to form fibres containing at least precipitated hydrocolloid and curd, followed by isolation of the fibres,
**characterised in that**
a) a mixture of curd, a material complexing calcium ions and water is made;
b) a solution in water of the hydrocolloid that precipitates with metal cations with a valency of at least two is made;
c) the mixture from a) and the solution from b) are mixed;
d) an aqueous solution that contains metal cations with a valency of at least two is added to the mixture obtained in c) to form fibres;
e) the fibres formed are isolated; and
f) the fibres formed are mixed with a binder that gels on heating, said binder being chosen from methylcellulose, hydrxoypropylmethylcellulose, curdlan gum, konjac gum, chicken egg protein, whey protein and mixtures of two or more of these binders.

15. Method according to Claim 14, **characterised in that** in step c) the temperature is set at 50 - 80 °C and the pH at a value of 6.5 - 7.5.

16. Method according to Claim 14 or 15, **characterised in that** skimmed milk with a fat content of at most 0.1 % (m/m) that has been subjected to a bacteria removal step and has been pasteurised at approximately 75 °C for approximately 15 sec is used as starting material for formation of the curd.

17. Method according to one or more of the preceding Claims 14 - 16, **characterised in that** use is made of microbial rennet for formation of the curd.

18. Method according to Claim 14 or 15, **characterised in that** the curd is formed by dispersing dried rennet casein in water.

19. Method according to one or more of Claims 14 - 18, **characterised in that** the use of lactic acid bacteria is dispensed with when the curd is formed.

20. Method according to one of Claims 14 - 19, **characterised in that** the binder is chosen from mixtures of two or more of methylcellulose, hydrxoypropylmethylcellulose, curdlan gum, konjac gum, chicken egg_protein and whey protein with starch or modified starch, sodium carboxymethylcellulose (Na CMC), carrageenan, xanthan gum, carob seed gum and gellan gum.

21. Method according to Claim 20, **characterised in that** the binder comprises methylcellulose and/or hydroxypropylcellulose.

22. Method according to Claim 21 or 22, **characterised in that** the binder comprises methylcellulose.

23. Method according to Claim 22, **characterised in that** the binder is a mixture of methylcellulose and chicken egg protein.

24. Method according to Claim 23, **characterised in that** 0.1 - 2.0 % (m/m) methylcellulose, based on the weight of the fibres, and 0.5 - 5.0 % (m/m) chicken egg protein, based on the weight of the fibres, are added as binder.

25. Method according to one or more of Claims 14 - 24, **characterised in that** the meat substitute product is made up to contain 0 - 10 % (m/m) fat, based on the total.

26. Method according to Claim 25, **characterised in that** the meat substitute product is made up to contain 2 - 10 % (m/m) fat, based on the total.

## Patentansprüche

1. Fleischersatzprodukt, das Fasern umfasst, die wenigstens aus Käsebruch, einem Hydrokolloid, das mit Metallionen präzipitiert wurde, das aus der Gruppe, bestehend aus Alginat, Pektin mit niedrigem Methoxygruppengehalt, Gellangummi und Gemischen dieser Hydrokolloide, ausgewählt ist, und Wasser besteht, **dadurch gekennzeichnet, dass** auch ein Bindemittel vorliegt, das beim Erwärmen geliert, wobei das Bindemittel aus Methylcellulose, Hydroxypropylmethylcellulose, Curdlan-Gummi, Konjac-Gummi, Hühnereiprotein, Molkeprotein und Gemischen aus zwei oder mehr dieser Bindemittel ausgewählt ist.

2. Fleischersatzprodukt gemäß Anspruch 1, **dadurch gekennzeichnet, dass** das Fleischersatzprodukt durch Mischen der Fasern mit dem Bindemittel, das bei Erwärmen geliert, erhalten wird.

3. Fleischersatzprodukt gemäß Anspruch 1 oder 2, **dadurch gekennzeichnet, dass** das Bindemittel aus Gemischen aus einem oder mehreren von Methylcellulose, Hydroxypropylmethylcellulose, Curdlan-Gummi, Konjac-Gummi, Hühnereiprotein und Molkeprotein mit Stärke oder modifizierter Stärke, Natriumcarboxymethylcellulose (Na-CMC), Carrageenan, Xanthangummi, Johannisbrotkerngummi und Gellangummi ausgewählt ist.

4. Fleischersatzprodukt gemäß einem oder mehreren der vorangehenden Ansprüche, **dadurch gekennzeichnet, dass** das Bindemittel Methylcellulose und/oder Hydroxypropylmethylcellulose umfasst.

5. Fleischersatzprodukt gemäß Anspruch 4, **dadurch gekennzeichnet, dass** das Bindemittel Methylcellulose umfasst.

6. Fleischersatzprodukt gemäß einem oder mehreren der Ansprüche 3 - 5, **dadurch gekennzeichnet, dass** das Bindemittel ein Gemisch aus Methylcellulose und Hühnereiprotein ist.

7. Fleischersatzprodukt gemäß Anspruch 6, **dadurch gekennzeichnet, dass** das Bindemittel 0,1 - 2,0 % (M/M) Methylcellulose, bezogen auf das Gewicht der Fasern, und 0,5 - 5,0 % (M/M) Hühnereiprotein, bezogen auf das Gewicht der Fasern, umfasst.

8. Fleischersatzprodukt gemäß einem oder mehreren der vorangehenden Ansprüche, **dadurch gekennzeichnet, dass** das Hydrokolloid, das mit Metallkationen präzipitiert wurde, Alginat ist.

9. Fleischersatzprodukt gemäß einem oder mehreren der Ansprüche 1 - 8, **dadurch gekennzeichnet, dass** das Produkt einen Fettgehalt von 2 - 10 % (M/M), bezogen auf das Gesamtgewicht davon, hat.

10. Fleischersatzprodukt gemäß einem oder mehreren der Ansprüche 1 - 8, **dadurch gekennzeichnet, dass** das Produkt für bis zu 6 Wochen bei 7 °C gehalten werden kann.

11. Fleischersatzprodukt gemäß einem oder mehreren der vorangehenden Ansprüche, **dadurch gekennzeichnet, dass** wenigstens ein Teil des verwendeten Bindemittels in Gelform vorliegt.

12. Fleischersatzprodukt gemäß einem oder mehreren der vorangehenden Ansprüche, **dadurch gekennzeichnet, dass** das Produkt in der Lage ist, Gefrieren und Auftauens auszuhalten, wobei Struktur und Feuchtigkeitsgehalt beibehalten werden.

13. Fleischersatzprodukt gemäß einem oder mehreren der vorangehenden Ansprüche, **dadurch gekennzeichnet, dass** das Fleischersatzprodukt Metallionen mit einer Valenz von wenigstens zwei, die durch Phosphat gebunden sind, enthält.

14. Verfahren zur Herstellung eines Fleischersatzprodukts, in dem Käsebruch, ein Hydrokolloid, das mit Metallkationen, die eine Valenz von wenigstens zwei haben, präzipitiert, das aus der Gruppe, bestehend aus Alginat, Pektin mit einem niedrigen Methoxygruppengehalt, Gellangummi und Gemischen dieser Hydrokolloide, ausgewählt ist, und Wasser in Gegenwart eines Materials, das Calciumionen komplexiert, gemischt werden; eine Lösung von Metallkationen mit einer Valenz von wenigstens zwei zugeführt wird, um Fasern zu bilden, die wenigstens präzipitiertes Hydrokolloid und Käsebruch enthalten, gefolgt von einer Isolierung der Fasern,
**dadurch gekennzeichnet, dass**
a) ein Gemisch aus Käsebruch, einem Material, das Calciumionen komplexiert, und Wasser hergestellt wird;
b) eine Lösung des Hydrokolloids, das mit Metallkationen mit einer Valenz von wenigstens zwei präzipitiert, in Wasser hergestellt wird;
c) das Gemisch aus a) und die Lösung aus b) gemischt werden;
d) eine wässrige Lösung, die Metallkationen mit einer Valenz von wenigstens zwei enthält, zu dem in c) erhaltenen Gemisch unter Bildung von Fasern gegeben wird;
e) die gebildeten Fasern isoliert werden und
f) die gebildeten Fasern mit einem Bindemittel gemischt werden, das bei Erwärmen geliert, wobei das Bindemittel aus Methylcellulose, Hydroxypropylmethylcellulose, Curdlan-Gummi, Konjac-Gummi, Hühnereiprotein, Molkeprotein und Gemischen aus zwei oder mehr dieser Bindemittel ausgewählt wird.

15. Verfahren gemäß Anspruch 14, **dadurch gekennzeichnet, dass** in Schritt c) die Temperatur auf 50 - 80 °C und der pH auf einen Wert von 6,5 - 7,5 eingestellt wird.

16. Verfahren gemäß Anspruch 14 oder 15, **dadurch gekennzeichnet, dass** Magermilch mit einem Fettgehalt von höchstens 0,1 % (M/M), die einem Bakterienentfernungsschritt unterzogen wurde und bei etwa 75 °C für etwa 15 Sekunden pasteurisiert wurde, als Ausgangsmaterial für die Bildung des Käsebruchs verwendet wird.

17. Verfahren gemäß einem oder mehreren der vorangehenden Ansprüche 14 - 16, **dadurch gekennzeichnet, dass** eine Verwendung von mikrobiellem Rennet zur Bildung des Käsebruchs erfolgt.

18. Verfahren gemäß Anspruch 14 oder 15, **dadurch gekennzeichnet, dass** der Käsebruch durch Dispergieren von getrocknetem Labkasein in Wasser gebildet wird.

19. Verfahren gemäß einem oder mehreren der Ansprüche 14 - 18, **dadurch gekennzeichnet, dass** auf die Verwendung von Milchsäurebakterien verzichtet wird, wenn der Käsebruch gebildet wird.

20. Verfahren gemäß einem der Ansprüche 14 - 19, **dadurch gekennzeichnet, dass** das Bindemittel aus Gemischen von aus oder mehreren von Methylcellulose, Hydroxypropylmethylcellulose, Curdlan-Gummi, Konjac-Gummi, Hühnereiprotein und Molkeprotein mit Stärke oder modifizierter Stärke, Natriumcarboxymethylcellulose (Na-CMC), Carrageenan, Xanthangummi, Johannisbrotkerngummi und Gellangummi ausgewählt wird.

21. Verfahren gemäß Anspruch 20, **dadurch gekennzeichnet, dass** das Bindemittel Methylcellulose und/oder Hydroxypropylcellulose umfasst.

22. Verfahren gemäß Anspruch 21 oder 22, **dadurch gekennzeichnet, dass** das Bindemittel Methylcellulose umfasst.

23. Verfahren gemäß Anspruch 22, **dadurch gekennzeichnet, dass** das Bindemittel ein Gemisch aus Methylcellulose und Hühnereiprotein ist.

24. Verfahren gemäß Anspruch 23, **dadurch gekennzeichnet, dass** 0,1 - 2,0 % (M/M) Methylcellulose, bezogen auf das Gewicht der Fasern, und 0,5 - 5,0 % (M/M) Hühnereiprotein, bezogen auf das Gewicht der Fasern, als Bindemittel zugesetzt werden.

25. Verfahren gemäß einem oder mehreren der Ansprüche 14 - 24, **dadurch gekennzeichnet, dass** das Fleischersatzprodukt so hergestellt ist, dass es 0 - 10 % (M/M) Fett, bezogen auf das Gesamte, enthält.

26. Verfahren gemäß Anspruch 25, **dadurch gekennzeichnet, dass** das Fleischersatzprodukt so hergestellt ist, dass es 2 - 10 % (M/M) Fett, bezogen auf das Gesamte, enthält.

## Revendications

1. Produit de substitution de la viande qui comprend des fibres constituées au moins de caillé, d'un hydrocolloïde précipité avec des cations métalliques choisi parmi le groupe consistant en alginate, pectine avec une faible teneur en groupe méthoxy, gomme gellane et des mélanges de ces hydrocolloïdes, et d'eau, **caractérisé en ce qu'**un liant qui se gélifie en chauffant est également présent, ledit liant étant choisi parmi la méthylcellulose, l'hydroxypropylméthyle cellulose, la gomme de curdlan, la gomme de konjac, des protéines d'oeuf de poule, des protéines lactosériques et des mélanges de deux ou plusieurs de ces liants.

2. Produit de substitution de la viande selon la revendication 1, **caractérisé en ce que** le produit de substitution de la viande a été obtenu en mélangeant les fibres avec le liant qui se gélifie en chauffant.

3. Produit de substitution de la viande selon la revendication 1 ou 2, **caractérisé en ce que** le liant est choisi parmi des mélanges de l'un ou plusieurs parmi la méthylcellulose, l'hydroxypropylméthylcellulose, la gomme de curdlan, la gomme de konjac, des protéines d'oeuf de poule et des protéines lactosériques, avec de l'amidon ou de l'amidon modifié, de la carboxyméthylcellulose de sodium (Na CMC), de la carraghénine, de la gomme de xanthane, de la gomme de graines de caroube, et de la gomme gellane.

4. Produit de substitution de la viande selon l'une ou plusieurs des revendications précédentes, **caractérisé en ce que** le liant comprend de la méthylcellulose et/ou de l'hydroxypropylméthylcellulose.

5. Produit de substitution de la viande selon la revendication 4, **caractérisé en ce que** le liant comprend de la méthylcellulose.

6. Produit de substitution de la viande selon l'une ou plusieurs des revendications 3 à 5, **caractérisé en ce que** le liant est un mélange de méthylcellulose et de protéines d'oeuf de poule.

7. Produit de substitution de la viande selon la revendication 6, **caractérisé en ce que** le liant comprend de 0,1 % à 2,0 % (m/m) de méthylcellulose, par rapport à la masse des fibres, et de 0,5 % à 5,0 % (m/m) de protéines d'oeuf de poule, par rapport à la masse des fibres.

8. Produit de substitution de la viande selon l'une ou plusieurs des revendications précédentes, **caractérisé en ce que** l'hydrocolloïde précipité avec des cations métalliques est l'alginate.

9. Produit de substitution de la viande selon l'une ou plusieurs des revendications 1 à 8, **caractérisé en ce que** le produit possède une teneur en matière grasse de 2 % à 10 % (m/m) par rapport à sa masse totale.

10. Produit de substitution de la viande selon l'une ou plusieurs des revendications 1 à 8, **caractérisé en ce que** ce produit peut être conservé jusqu'à 6 semaines à une température de 7° C.

11. Produit de substitution de la viande selon l'une ou plusieurs des revendications précédentes, **caractérisé en ce qu'**au moins une partie du liant utilisé est présente sous forme de gel.

12. Produit de substitution de la viande selon l'une ou plusieurs des revendications précédentes, **caractérisé en ce que** le produit est capable de supporter une congélation et une décongélation, sa structure et sa teneur en humidité étant conservées.

13. Produit de substitution de la viande selon l'une ou plusieurs des revendications précédentes, **caractérisé en ce que** le produit de substitution de la viande contient des cations métalliques d'une valence d'au moins deux liaisons par phosphate.

14. Procédé de préparation d'un produit de substitution de la viande, dans lequel un caillé, un hydrocolloïde qui précipite avec des cations métalliques d'une valence d'au moins deux choisi parmi le groupe consistant en alginate, pectine avec une faible teneur en groupe méthoxy, gomme gellane et des mélanges de ces hydrocolloïdes, et de l'eau, sont mélangés en présence d'un matériau complexant des ions calcium ; une solution de cations métalliques d'une valence d'au moins deux est fournie afin de former des fibres contenant au moins un hydrocolloïde précipité et du caillé, suivi par l'isolation des fibres, **caractérisé en ce que**
a) un mélange de caillé, d'un matériau complexant des ions calcium et d'eau est préparé ;
b) une solution dans l'eau de hydrocolloïde qui précipite avec des cations métalliques d'une valence d'au moins deux est préparée ;
c) le mélange de a) et 1a solution de b) sont mélangés ;
d) une solution aqueuse contenant des cations métalliques d'une valence d'au moins deux est ajoutée au mélange obtenu en c) pour former des fibres ;
e) les fibres formées sont isolées ; et
f) les fibres formées sont mélangées avec un liant qui se gélifie en chauffant, ledit liant étant choisi parmi la méthylcellulose, l'hydroxypropylméthyle cellulose, la gomme de curdlan, la gomme de konjac, des protéines d'oeuf de poule, des protéines lactosériques et des mélanges de deux ou plusieurs de ces liants.

15. Procédé selon la revendication 14, **caractérisé en ce que** dans l'étape c), la température est fixée entre 50° C et 80° C et le pH à une valeur comprise entre 6,5 et 7,5.

16. Procédé selon la revendication 14 ou 15, **caractérisé en ce que** du lait écrémé ayant une teneur en matière grasse maximale de 0,1 % (m/m), soumis à une étape d'élimination des bactéries et pasteurisé à approximativement 75° C pendant environ 15 secondes, est utilisé comme matière première pour la formation du caillé.

17. Procédé selon l'une ou plusieurs des revendications précédentes 14 à 16, **caractérisé en ce qu'**on utilise une présure microbienne pour la formation du caillé.

18. Procédé selon la revendication 14 ou 15, **caractérisé en ce que** le caillé est formé en dispersant de la caséine-présure sèche dans l'eau.

19. Procédé selon l'une ou plusieurs des revendications 14 à 18, **caractérisé en ce que** l'utilisation de bactéries lactiques n'est pas nécessaire lors de la formation du caillé.

20. Procédé selon l'une des revendications 14 à 19, **caractérisé en ce que** le liant est choisi parmi des mélanges de deux ou plusieurs parmi la méthylcellulose, l'hydroxypropylméthylcellulose, la gomme de curdlan, la gomme de konjac, des protéines d'oeuf de poule et des protéines lactosériques, avec de l'amidon ou de l'amidon modifié, de la carboxyméthylcellulose de sodium (Na CMC), de la carraghénine, de la gomme de xanthane, de la gomme de graines de caroube, et de la gomme gellane.

21. Procédé selon la revendication 20, **caractérisé en ce que** le liant comprend de la méthylcellulose et/ou de l'hydroxypropylcellulose.

22. Procédé selon la revendication 21 ou 22, **caractérisé en ce que** le liant comprend de la méthylcellulose.

23. Procédé selon la revendication 22, **caractérisé en ce que** le liant est un mélange de méthylcellulose et de protéines d'oeuf de poule.

24. Procédé selon la revendication 23, **caractérisé en ce que** 0,1 % à 2,0 % (m/m) de méthylcellulose, par rapport à la masse des fibres, et 0,5 % à 5,0 % (m/m) de protéines d'oeuf de poule, par rapport à la masse des fibres, sont ajoutés en tant que liant.

25. Procédé selon l'une ou plusieurs des revendications 14 à 24, **caractérisé en ce que** le produit de substitution de la viande est préparé pour contenir de 0 % à 10 % (m/m) de matière grasse, par rapport à la totalité.

26. Procédé selon la revendication 25, **caractérisé en ce que** le produit de substitution de la viande est préparé pour contenir de 2 % à 10 % (m/m) de matière grasse, par rapport à la totalité.
